# EUROPÄISCHE PATENTANMELDUNG

(11) **EP 1 579 767 A2**
(43) Veröffentlichungstag der Anmeldung: **28.09.2005**
(21) Anmeldenummer: 05006245.4
(22) Anmeldetag: 22.03.2005
(51) Int. Cl.: A21D 13/00, A21D 13/08, A21C 9/06

(54) **Verfahren und Vorrichtung zum Herstellen von mit Füllung versehenen Backwaren**

(30) Priorität: 24.03.2004 DE 102004014249
(71) Anmelder: Klöpfer, Matthias, 73457 Essingen (DE)
(72) Erfinder: Thiess, Marcel, 73457 Essingen (DE)
(74) Vertreter: Lorenz, Werner

(57) **Zusammenfassung**

Bei einem Verfahren zum Herstellen von mit Füllungen versehenen Backwaren werden diese aus einer Teigbahn in runde oder dreieckige Einzelformen getrennt und wenigstens annähernd in Sichelform gerollt, insbesondere in Hörnchen. Dabei sind folgende Schritte vorgesehen: Auswalzen eines kontinuierlich oder taktweise vorwärtsbewegten Teigstranges zu der Teigbahn; Aufbringen einer Füllung auf die Teigbahn, wobei die Füllung flächig über einen Teilbereich der Teigbahn aufgebracht wird; Einbringung eines Trennschnittes, der den mit der Füllung flächig versehenen Teilbereich von dem nicht mit einer Füllung versehenen Bereich der Teigbahn trennt; Auflegen des nicht mit einer Füllung versehenen Bereichs der Teigbahn auf den mit der Füllung versehenen Teilbereich der Teigbahn; Ausschneiden von Einzelformen aus der Teigbahn; Einrollen der Einzelformen jeweils in eine annähernde Sichelform.

## Beschreibung

Die Erfindung betrifft ein Verfahren zum Herstellen von mit Füllungen versehenen Backwaren, die aus einer Teigbahn in runde oder dreieckige Einzelformen getrennt und wenigstens annähernd in Sichelform gerollt werden, insbesondere zum Herstellen von Hörnchen. Die Erfindung betrifft auch eine Vorrichtung zum Herstellen von mit Füllungen versehenen Backwaren.

Allgemein ist die Herstellung von Backwaren mit Füllungen, z.B. von Hörnchen, die in ein Sichelform bzw.

Mondsichelform mit einzeln sichtbaren Wicklungen, geformt sind, bekannt.

Die industrielle Herstellung bzw. maschinelle Herstellung in großen Stückzahlen erfolgt aus Teigen oder Teigsträngen, die zu einer Teigbahn ausgerollt werden, welche sich kontinuierlich oder diskontinuierlich vorwärts bewegt. Durch eine über der Teigbahn angeordnete Positioniereinrichtung wird portionsweise Füllung auf die Teigbahn aufgebracht. Anschließend wird die Teigbahn in einzelne Teigstücke ausgestanzt, wobei die ausgestanzte Form an die spätere Form des Fertigproduktes anzupassen ist. Bei der Herstellung von Hörnchen erfolgt die Ausstanzung in Dreieckform, wobei dann durch eine Aufrolleinrichtung von der Basis des Dreieckes her eine Aufrollung erfolgt, wodurch die Sichelform entsteht. Möglich ist auch eine Ausstanzung in kreisförmiger Form, aus denen ebenfalls wenigstens annähernd sichelförmige Backwaren hergestellt werden können.

Im Bedarfsfalle können von der Portioniereinrichtung auch Füllungen auf die bereits ausgestanzten Teigstücke aufgebracht werden.

Nachteilig bei diesem Verfahren ist jedoch, dass sich die Füllung konzentriert nur im mittleren Bereich der fertigen Backware befindet. Durch diese mittige Konzentration der Füllung ergeben sich beim Verzehr deutlich unterschiedliche Ergebnisse. In den äußeren Bereichen schmeckt die Backware relativ "flach", während im mittleren Bereich das Aroma der Füllung sehr intensiv ist.

Der vorliegenden Erfindung liegt daher die Aufgabe zugrunde, ein Verfahren zum Herstellen von mit Füllungen versehenen Backwaren zu schaffen, das für eine Großserienfertigung geeignet ist und mit dem geschmackvolle Backwaren hergestellt werden können.

Erfindungsgemäß wird diese Aufgabe durch folgende Schritte gelöst:
a) Auswalzen eines kontinuierlich oder taktweise vorwärtsbewegten Teigstranges zu einer Teigbahn;
b) Aufbringen einer Füllung auf die Teigbahn, wobei die Füllung flächig über einen Teilbereich der Teigbahn aufgebracht wird;
c) Einbringung eines Trennschnittes, der den mit der Füllung flächig versehenen Teilbereich von dem nicht mit einer Füllung versehenen Bereich der Teigbahn trennt;
d) Auflegen des nicht mit einer Füllung versehenen Bereichs der Teigbahn auf den mit der Füllung versehenen Teilbereich der Teigbahn;
e) Ausschneiden von Einzelformen aus der Teigbahn;
f) Einrollen der Einzelformen jeweils in eine annähernde Sichelform.

Durch das erfindungsgemäße Verfahren lässt sich eine Backware, insbesondere ein Hörnchen, herstellen, wobei die Füllung vollflächig im Inneren der Backware verteilt ist. Dies bedeutet, das Füllungsaroma und damit der Geschmack der Backware ist gleichmäßig, womit jeder Biss der Person, die die Backware verzehrt, gleich schmeckt.

Ein weiterer Geschmacksvorteil besteht darin, dass beim Aufrollen der ausgestanzten Teigbahn in die gewünschte Endform seitlich Füllmasse herausquillt. Wenn es sich dabei um eine süße Füllmasse, z.B. eine Nussmasse, handelt, wird der ausgetretene Teil der Füllung beim Backen karamellisiert, was zusätzlich zur Geschmacksverbesserung beiträgt.

Einer der Kernpunkte der vorliegenden Erfindung liegt in der Maßnahme, dass nur ein Teilbereich der Teigbahn mit der Füllung versehen wird, der vorzugsweise der halben Breite der Teigbahn entspricht, mit einem anschließenden Trennen der Teigbahn in einen mit Füllung versehenen und einen ohne Füllung versehenen Bereich und einem nachfolgenden Abdecken der Füllung durch den Teilbereich der Teigbahn, der nicht mit Füllung versehen ist. Praktisch wird auf diese Weise ein "Sandwichverfahren" geschaffen, wobei sich die Füllung im Inneren der beiden übereinandergelegten Teigbahnen befindet. Das erfindungsgemäße "Sandwichverfahren" löst das Problem, dass industriell bzw. maschinell eine Weiterverarbeitung eines vollständig mit Füllung bestrichenen Teiges in der Praxis auf erhebliche Schwierigkeiten stoßen würde. Die Füllung ist nämlich im allgemeinen klebrig und dies bedeutet, Einrichtungen und Maschinen, die für die weitere Verarbeitung bis zum Einrollen der Einzelstücke erforderlich sind, würden sich sehr schnell mit der Füllung verschmutzen bzw. würden die Einrichtungen und Maschinen entsprechend verschmieren bzw. verkleben.

Dadurch, dass die Füllung nunmehr zwischen den beiden Teigbahnen angeordnet ist, lässt sich die Teigbahn problemlos weiter verarbeiten. In Anspruch 5 ist eine Vorrichtung zur Herstellung von mit Füllung versehenen Backwaren aufgezeigt, mit der das erfindungsgemäße Verfahren durchgeführt werden kann und welche folgende Merkmale aufweist:
a) Wenigstens ein Förderband zur Aufnahme eines Teigstranges;
b) einer Auswalzeinrichtung zur Auswalzung des Teigstranges in eine Teigbahn;
c) eine Füllungsportioniereinrichtung zum portionsweise Aufbringen von Füllung auf einen Teilbereich der Teigbahn ;
d) einer Verteileinrichtung zur Verteilung der portionsweise aufgebrachten Füllung wenigstens annähernd über den gesamten Teilbereich;
e) einer Trennschneideinrichtung zum Einbringen eines Trennschnittes parallel zur Vorschubrichtung, der den flächig mit Füllung versehenen Teilbereich der Teigbahn von dem nicht mit Füllung versehenen Bereich trennt;
f) einer Abnahmeeinrichtung für die Teigbahn, die nicht mit Füllung versehen ist, von dem Förderband und einer Auflegeeinrichtung für den nicht mit einer Füllung versehenen Bereich der Teigbahn auf den Teilbereich der Teigbahn, der mit der Füllung versehen ist;
g) einer Ausstanzeinrichtung zum Ausschneiden von Einzelformen aus der Teigbahn mit ihren übereinander liegenden Teigbahnbereichen und der dazwischenliegenden Füllung;
h) einer Aufrolleinrichtung zum Aufrollen der Einzelformen in wenigstens eine annähernde Sichelform.

Vorteilhafte weitere Ausgestaltungen und Weiterbildungen ergeben sich aus den übrigen Unteransprüchen und aus dem nachfolgend anhand der Zeichnung prinzipmäßig beschriebenen Ausführungsbeispiel.

Es zeigt:
- Fig. 1: eine Draufsicht auf eine erfindungsgemäße Vorrichtung zum Herstellen von mit Füllungen versehenen Backwaren aus einem Teigstrang; und
- Fig. 2: einen Querschnitt nach der Linie II-II in vergrößerter Darstellung.

Grundsätzlich ist das Verfahren zur Herstellung von mit Füllung versehenen Backwaren aus Teig- bzw. Teigsträngen allgemein bekannt, weshalb nachfolgend nur auf die spezifischen Besonderheiten des erfindungsgemäßen Verfahrens näher eingegangen wird. Gleiches gilt grundsätzlich auch für die meisten zur Durchführung des Verfahrens erforderlichen Einrichtungen.

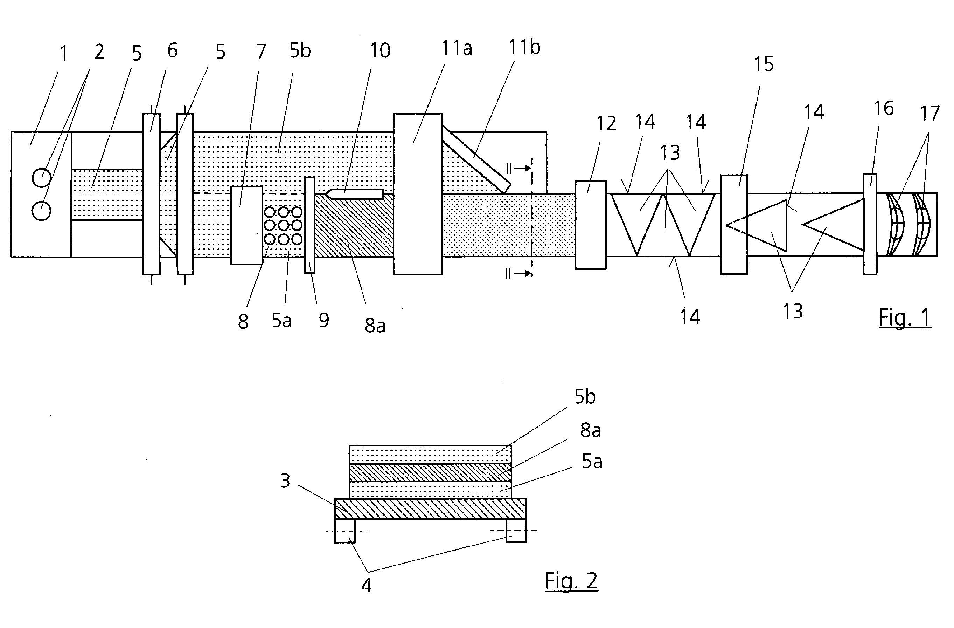

Gemäß Fig. 1 weist die Vorrichtung eine Portioniereinrichtung 1 auf, durch die aus einer vorgefertigten Teigmasse Teigstränge 2 auf ein kontinuierlich oder diskontinuierlich vorwärts bewegtes Förderband 3 aufgebracht wird. Das Förderband 3 kann auf Laufrollen 4 in nicht näher dargestellter Weise vorwärts bewegt werden. In der Portioniereinrichtung 1 können die Teigstränge 2 auch bereits zu einem Teigband bzw. zu einer Teigbahn 5 ausgeformt werden. Die Teigbahn 5 wird anschließend durch ein Querwalzwerk 6 als Auswalzeinrichtung in die erforderliche Breite und auch Dicke ausgewalzt. Hierzu können z.B. Walzen vorgesehen sein, deren Längsachse quer zur Vorschubrichtung der Teigbahn 5 liegen. Als nächster Schritt folgt das Aufbringen einer Füllung durch eine Füllungsportioniereinrichtung 7. Die Füllungsportioniereinrichtung 7 ist derart ausgebildet, dass sie sich nur über einen Teilbereich 5a der Teigbahn 5 erstreckt, welche der Hälfte der Teigbahnbreite entspricht. Durch die Füllungsportioniereinrichtung 7 werden einzelne nebeneinander auf Abstand zueinander angeordnete Füllungsportionen 8 ausgegeben. Durch den weiteren Vorschub des Förderbandes 3 gelangen die einzelnen Füllungsportionen 8 zu einer Verteileinrichtung 9. Die Verteileinrichtung 9 kann z.B. ein Verteilglied in Form eines Streichlineales aufweisen, das mit geringem Abstand über der Teigbahn 5a angeordnet ist und während des Vorschubes der Teigbahn 5 die Füllungsportionen 8 gleichmäßig als Füllmasse 8a über den gesamten Teilbereich 5a der Teigbahn 5 verteilt.

Wie aus Fig. 1 ersichtlich ist, läuft parallel zu dem vollflächig mit Füllung 8a bestrichenen Teilbereich 5a der Teigbahn 5 ein nicht mit Füllung bestrichener Bereich 5b der Teigbahn 5. In Vorschubrichtung nach der Verteileinrichtung 9 ist eine Trenneinrichtung 10, z.B. ein Trennmesser, angeordnet. Die Trenneinrichtung 10 ist mit ihrem Trennglied gegen die Vorschubrichtung der Teigbahn 5 gerichtet und teilt die bis zu diesem Verfahrensschritt noch über die gesamte Breite einheitliche Teigbahn 5 in zwei Teile, nämlich einen Teilbereich 5a, der mit der Füllung 8a vollflächig versehen ist, und einen Bereich 5b, der keine Füllung besitzt.

Als nächster Schritt ist eine Abnahme- und Auflegeeinrichtung 11 an bzw. über der Teigbahn 5 angeordnet. Die Abnahme- und Auflegeeinrichtung 11 nimmt in nicht näher dargestellter Weise den Bereich 5b von dem Förderband 3 ab und legt diesen auf die Füllung 8a und damit auch auf den Teilbereich 5a. Durch diese Maßnahme entsteht ein "Sandwich" mit einem unteren Teilbereich 5a, einer darauf vollflächig verstrichenen Füllung 8a und einen die Füllung 8a abdeckenden Bereich 5b (siehe vergrößerte Darstellung in Fig. 2).

Im nächsten Schritt folgt eine Ausstanzeinrichtung 12 für die "Sandwich"-Teigbahn, welche nunmehr nur noch der halben Breite der ursprünglich durch das Querwalzwerk ausgewalzten Teigbahn 5 entspricht. Durch die Ausstanzeinrichtung 12 werden aus der "Sandwich"-Teigbahn einzelne Teigwaren in Dreieckform so ausgestanzt, dass nahezu kein Abfall entsteht. Wie aus Fig. 1 ersichtlich, entstehen auf diese Weise Einzelformen 13, wobei jeweils eine Basisseite 14 zwischen zwei Dreieckspitzen angeordnet ist bzw. die Einzelformen 13 bezüglich ihren Basisseiten 14 um 180° versetzt zueinander angeordnet sind.

Während des weiteren Vorschubs gelangen die Einzelformen 13 unter eine Ausrichteinrichtung 15, durch die die Einzelformen 13 so ausgerichtet sind, dass deren Basisseiten 14 alle in die gleiche Richtung zeigen bzw. parallel zueinander angeordnet sind. Hierzu werden die Einzelformen 13 jeweils abwechselnd um 90° gegensinnig in der Ausrichteinrichtung 15 gedreht.

Abschließend werden die ausgerichteten Einzelformen 13 zu einer Aufrolleinrichtung 16 bekannter Bauart zugeführt und durch diese so aufgerollt, dass sich eine wenigstens annähernd Mondsichelform für Hörnchen 17 ergibt.

In üblicher Weise sind bei den Hörnchen 17 die einzelnen Wicklungen sichtbar, wobei bei dem erfindungsgemäßen Hörnchen durch das flächige Aufbringen der Füllung 8a beim Aufrollen an den Rändern Füllmasse in geringem Umfang austreten kann. Abschließend können die Hörnchen 17 in üblicher Weise in einem Backofen gebacken werden.

Die vorstehend beschriebenen Einrichtungen sind nur prinzipmäßig genannt. Selbstverständlich sind hier im Rahmen des erfindungsgemäßen Verfahrens Abwandlungen und spezifische Ausgestaltungen möglich. So können z.B. anstelle eines sich über die gesamte Breite der Teigbahn 5 erstreckendes Förderband vorgesehen sein oder auch zwei parallel nebeneinander angeordnete Förderbändern, wobei jedes Förderband für einen Bereich 5a bzw. 5b der Teigbahn 5 vorgesehen ist. Anstelle einer Ausstanzeinrichtung 12, die Einzelformen 13 in Dreieckform herstellt, kann selbstverständlich auch eine Ausstanzeinrichtung 12 vorgesehen sein, durch die andere Formen ausgestanzt werden, wie z.B. kreisrunde Einzelformen, die sich ebenfalls in eine annähernde Mondsichelform wickeln lassen.

Durch das erfindungsgemäße Verfahren und die Vorrichtung hierzu lassen sich mit einer hohen Durchsatzzahl, von z.B. 1.000 bis 3.000 Stück/Stunde, herstellen.

Selbstverständlich ist das erfindungsgemäße Produkt auch für kleinere Bäckereien oder Backbetriebe geeignet, welche z.B. industriell hergestellten Teig, sogenannte grüne gefrostete Teiglinge, zukaufen. Derartige gefrostete Teiglinge können dann nach dem Auftauen in die Portionierungseinrichtung 1 eingegeben werden.

Damit die nunmehr aus zwei Teilbereichen 5a und 5b mit dazwischenliegender vollflächiger Füllung 8a hergestellte Einzelformen 13 nicht zu dick werden, wird man im allgemeinen den Teig 5 durch das Querwalzwerk 6 deutlich dünner auswalzen als wie dies bei normalen Verfahren bekannt ist.

Vorteilhafte Dicken in der Praxis haben sich zwischen 1 und 2 mm, vorzugsweise 1,2 bis 1,5 mm, herausgestellt.

Als Füllmasse zum Aufbringen der vollflächigen Füllung 8a lassen sich die verschiedensten Füllmassen verwenden. Hier bestehen keine besonderen Beschränkungen. So können z.B. süße Füllmassen mit Mandelfüllungen, Mohnfüllungen, Nussfüllungen und ähnlichem verwendet werden. Ebenso sind auch Fleischfüllungen oder vegetarische Füllungen möglich.

In vorteilhafter Weise wird man anstelle eines Plunderteiges einen Hefeteig verwenden, welcher nicht so fettreich ist wie ein Plunderteig. Plunderteige sind zwar leichter maschinell bzw. industriell zu verarbeiten, aber bei dem erfindungsgemäßen Verfahren ist auch die Verwendung von Hefeteig möglich.

## Patentansprüche

1. Verfahren zum Herstellen von mit Füllungen versehenen Backwaren, die aus einer Teigbahn in runde oder dreieckige Einzelformen getrennt und wenigstens annähernd in Sichelform gerollt werden, insbesondere zum Herstellen von Hörnchen,
**gekennzeichnet durch**
folgende Schritte:
a) Auswalzen eines kontinuierlich oder taktweise vorwärtsbewegten Teigstranges (2) zu einer Teigbahn (5);
b) Aufbringen einer Füllung auf die Teigbahn (5), wobei die Füllung flächig über einen Teilbereich (5a) der Teigbahn (5) aufgebracht wird;
c) Einbringung eines Trennschnittes, der den mit der Füllung (8a) flächig versehenen Teilbereich (5a) von dem nicht mit einer Füllung versehenen Bereich (5b) der Teigbahn (5) trennt;
d) Auflegen des nicht mit einer Füllung (8a) versehenen Bereichs (5b) der Teigbahn (5) auf den mit der Füllung (8a) versehenen Teilbereich (5a) der Teigbahn (5);
e) Ausschneiden von Einzelformen (13) aus der Teigbahn (5a,5b);
f) Einrollen der Einzelformen (13) jeweils in eine annähernde Sichelform.

2. Verfahren nach Anspruch 1,
**dadurch gekennzeichnet , dass**
der mit der Füllung (8a) versehene Teilbereich (5a) wenigstens annähernd der halben Breite der Teigbahn (5) entspricht.

3. Verfahren nach Anspruch 1,
**dadurch gekennzeichnet , dass**
die Teigbahn (5) kontinuierlich vorwärts bewegt wird, wobei die Füllung (8) portionsweise auf den Teilbereich (5a) der Teigbahn (5) aufgebracht und anschließend flächig verstrichen wird.

4. Verfahren nach Anspruch 1,
**dadurch gekennzeichnet , dass**
das Ausschneiden in Einzelformen (13) in Dreiecksformen erfolgt, welche anschließend mit ihren Wickelseiten in eine einheitliche Richtung ausgerichtet werden.

5. Vorrichtung zur Herstellung von mit Füllungen versehenen Backwaren, die aus einem runden oder dreieckigen Teigling geformt und wenigstens annähernd in Sichelform gerollt werden, insbesondere zum Herstellen von Hörnchen, mit folgenden Merkmalen:
a) Wenigstens ein Förderband (3) zur Aufnahme eines Teigstranges (2);
b) einer Auswalzeinrichtung (6) zur Auswalzung des Teigstranges (2) in eine Teigbahn (5);
c) eine Füllungsportioniereinrichtung (7) zum portionsweise Aufbringen von Füllungsportionen (8) auf einen Teilbereich (5a) der Teigbahn (5);
d) einer Verteileinrichtung (9) zur Verteilung der portionsweise aufgebrachten Füllungsportion (8) wenigstens annähernd als flächige Füllung (8a) über den gesamten Teilbereich (5a);
e) einer Trennschneideinrichtung (10) zum Einbringen eines Trennschnittes parallel zur Vorschubrichtung, der den flächig mit Füllung (8a) versehenen Teilbereich (5a) der Teigbahn (5) von dem nicht mit Füllung versehenen Bereich (5b) trennt;
f) einer Abnahmeeinrichtung (11a) für die Teigbahn (5), die nicht mit Füllung versehen ist, von dem Förderband (3) und einer Auflegeeinrichtung (11b) für den nicht mit einer Füllung versehenen Bereich (5b) der Teigbahn (5) zum Auflegen auf den Teilbereich (5a) der Teigbahn (5), der mit der Füllung (8a) versehen ist;
g) einer Ausstanzeinrichtung (12) zum Ausschneiden von Einzelformen (13) aus der Teigbahn (5) mit ihren übereinander liegenden Teigbahnbereichen (5a,5b) und der dazwischenliegenden Füllung (8a);
h) einer Aufrolleinrichtung (16) zum Aufrollen der Einzelformen (13) in wenigstens eine annähernde Sichelform.

6. Vorrichtung nach Anspruch 5,
**dadurch gekennzeichnet , dass**
durch die Verteileinrichtung (9) ein Teilbereich (5a) überstrichen ist, der wenigstens annähernd der halben Breite der Teigbahn (5) entspricht.

7. Vorrichtung nach Anspruch 5 oder 6,
**dadurch gekennzeichnet , dass**
die Verteileinrichtung (9) ein sich quer zur Vorschubrichtung des Förderbandes (3) angeordnetes Verteilerglied aufweist, welches in Abstand über dem Förderband (3) angeordnet ist.

8. Vorrichtung nach Anspruch 7,
**dadurch gekennzeichnet , dass**
das Verteilglied (9) ein mit Abstand über der Teigbahn (5) angeordnetes Streichlineal (9) aufweist.

9. Vorrichtung nach einem der Ansprüche 5 bis 8,
**dadurch gekennzeichnet , dass**
eine Ausrichteinheit (15) für die jeweils in eine Dreieckform geschnittenen Einzelformen (13) vorgesehen ist zur Ausrichtung der Wickelseiten in eine einheitliche Aufrollrichtung.

10. Hörnchen mit einer Füllung, wobei die Füllung (8a) wenigstens annähernd vollflächig im Inneren des sichelförmig gerollten Hörnchens verteilt ist.
